# EUROPEAN PATENT SPECIFICATION

(11) **EP 2 209 694 B1**
(45) Date of publication and mention of the grant of the patent: **07.01.2015**
(21) Application number: 08849994.2
(22) Date of filing: 13.11.2008
(51) Int. Cl.: G10L 21/0216, B60R 11/00, G10L 21/0208, B62D 1/04, B60R 11/02, B60R 16/037

(54) **VEHICLE COMMUNICATION SYSTEM AND METHOD**
FAHRZEUGKOMMUNIKATIONSSYSTEM UND -VERFAHREN
SYSTÈME ET PROCÉDÉ DE COMMUNICATION POUR VÉHICULE

(30) Priority: 13.11.2007 US 996351 P; 04.01.2008 US 6298; 20.06.2008 US 213591
(43) Date of publication of application: 28.07.2010
(73) Proprietor: TK Holdings Inc., Auburn Hills, MI 48326 (US)
(72) Inventor: CECH, Leonard, Brighton MI 48116 (US); O'BOYLE, Michael, Edmund, Howell MI 48432 (US)
(74) Representative: Smith, Samuel Leonard
(86) International application number: PCT/US2008/083404
(87) International publication number: WO 2009/064886

(56) References cited:
- WO-A1-2007/021263
- DE-A1-102004 042 331
- JP-A- 2006 264 615
- KR-A- 20000 017 980
- KR-A- 20000 017 980
- KR-A- 20060 026 157
- US-A- 5 666 102
- US-A1- 2002 068 605
- US-A1- 2002 135 163
- US-B2- 6 983 170

## Description

### BACKGROUND

The present application relates generally to a system for providing a message to a vehicle driver. More specifically, the application relates to a system for facilitating communication and providing information to a vehicle driver.

Conventional vehicle navigation systems employ various displays to inform the driver of the next navigation event (e.g., maneuver or turn) and the distance to the event. Driver navigation based on simple icon information is often termed "Turn-by-Turn" navigation. Tum-by-Tum icons are conventionally presented in a small display on the driver instrument panel (IP) or in the steering wheel rim. The icons are typically only updated when a driver completes a required turn or when a new maneuver event is within a designated range.

The quality, reliability, and prevalence of vehicle navigation systems as well as map resolution and road attributes continue to rapidly improve. The National Highway Traffic Safety Administration (NHTSA) has initiated a new regulation mandating the use of electronic stability control (ESC) systems on all U.S. vehicles by the year 2013. Conventional ESC systems use a steering angle sensor to track the real-time status of the driver steering input. Vehicle inertial and wheel speed sensors can provide real-time information about vehicle dynamics. Predictive sensors such as radar, Light Detection and Ranging (LIDAR), and vision sensors can provide anticipatory information of what is in the vehicle path. Map and GPS based navigation systems can provide information on the current and pending road geometry, features and attributes. Intelligent transportation systems such as vehicle to vehicle and vehicle to infrastructure communications can provide additional information on the road and traffic situation. Each of these sensors and sources of data can provide a wide range of information that may be useful in enhancing safety or driver assistance.

A communication steering wheel device has been developed in which a variety of informational messages can be displayed to the driver primarily through icons. These messages include a variety of warning messages, informational messages about upcoming landmarks, and navigation commands. The communication steering wheel can be configured to present driver warning, assistance, and diagnostic information to the driver within his or her peripheral vision when looking at the approaching road. Currently this information is sent via a wired connection between the steering wheel and the vehicle wired network (CANbus, other any other vehicle bus). The existing connection is generally not redundant, as there are a limited number of physical connections that can exist between the steering column and the steering wheel. Accordingly, a system is needed that can facilitate communication via the communication steering wheel with other vehicle systems not connected to a wired vehicle network to provide useful information and services to the user of the vehicle.

DE 10 2004 042 331shows a communication steering wheel for a vehicle, comprising:
a display configured to output information to a driver of the vehicle; a wireless transceiver configured to operably connect to a wireless device; and a controller configured to receive input from the wireless transceiver; wherein the controller is configured to output a signal to the display.
US 2002/0135163 describes a vehicle steering device comprising a steering wheel which has a gas bag module with a gas bag and a covering cap on a front side. The covering cap closes an outlet opening for the gas bag up to its unfolding. At least one of a display- and operating device is arrange in the covering cap. The outlet opening runs around at least one of the display- and operating device. KR 2000 0017980 describes a motor vehicle wheel alignment marking device provided to help a safe driving while traveling and parking by visually indicating the alignment state of the wheels to a driver sitting on a driver seat. A motor vehicle wheel alignment marking device comprises: a location detecting/transferring unit and a location receiving/marking unit for receiving the signal outputted from the location detecting/transferring unit for indicating the steering wheel state of the motor vehicle wheel visually. Herein, the location detecting/transferring unit is composed of: a hall sensor detecting unit being attached to the steering wheel of the motor vehicle for detecting the moving state of the steering wheel; a controlling unit for receiving the signal being outputted from the hall sensor detecting unit for outputting after a code transformation; and an ultra violet transferring unit for transferring the transformed signal being outputted from the controlling unit as an ultra violet signal.

### SUMMARY

According to the present invention, there is provided a communication steering wheel as defined in appended claim 1.

According to another embodiment, a vehicle communication system for a vehicle includes the steering wheel.

It is to be understood that both the foregoing general description and the following detailed description are exemplary and explanatory only, and are not restrictive of the claimed subject matter.

### BRIEF DESCRIPTION OF THE DRAWINGS

Features, aspects and advantages of the present invention will become apparent from the following description, appended claims, and the accompanying exemplary embodiments shown in the drawings, which are briefly described below.
FIG. 1 is a perspective view of a vehicle cockpit, according to an exemplary embodiment.
FIG. 2 is a block diagram of a vehicle communication system, according to an exemplary embodiment.
FIG. 3 is a schematic view of a steering wheel including a display, according to an exemplary embodiment.
FIG. 4 is process flow diagram of a method for providing driver guidance, according to an exemplary embodiment.

### DETAILED DESCRIPTION

Embodiments of the disclosure will be described below with reference to the accompanying drawings. It should be understood that the following description is intended to describe exemplary embodiments, and not to limit the claimed subject matter.

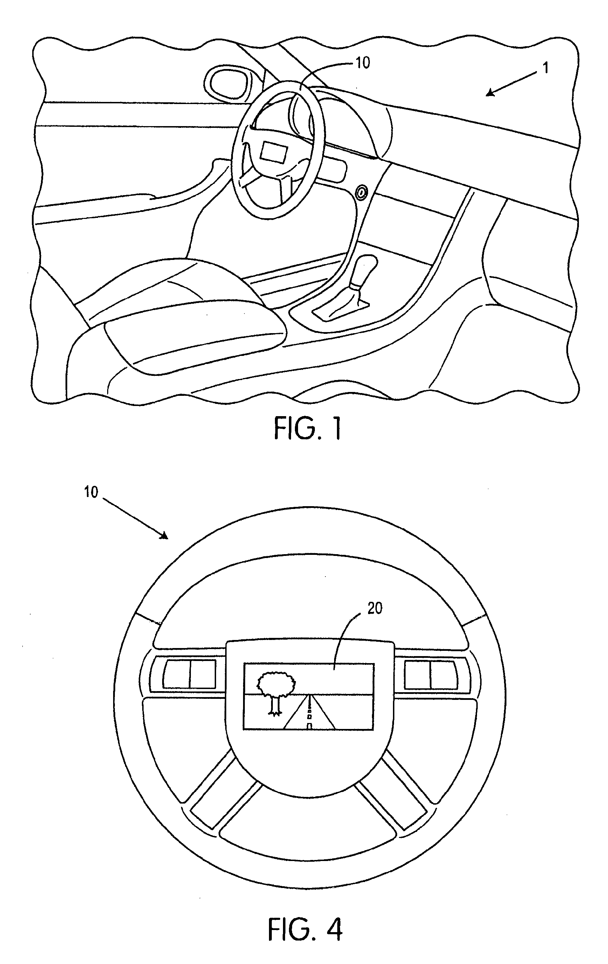

Referring to FIG. 1, a vehicle driver may operate a vehicle from a cockpit 1. The cockpit 1 includes a communication steering wheel 10. The driver may rotate the communication steering wheel 10 to turn the vehicle wheels and steer the vehicle in a desired direction. The communication steering wheel 10 may also be configured to provide a message (e.g., a visual message, an audible message, etc.) to the driver related to a current vehicle state, the road geometry or conditions, a predicted vehicle state, or any combination thereof. The message may be generated by a controller (not shown) based on data related to the vehicle and road. For example, the message can be a warning message of excessive or insufficient speed, acceleration, or braking or under-steer or over-steer. The message may also include instructions on actions to take, for example how to negotiate or maneuver a corner, obstacle, or road condition. According to various exemplary embodiments, the communication steering wheel 10 may be any steering wheel usable by a driver to steer the vehicle and capable of providing a message to the driver.

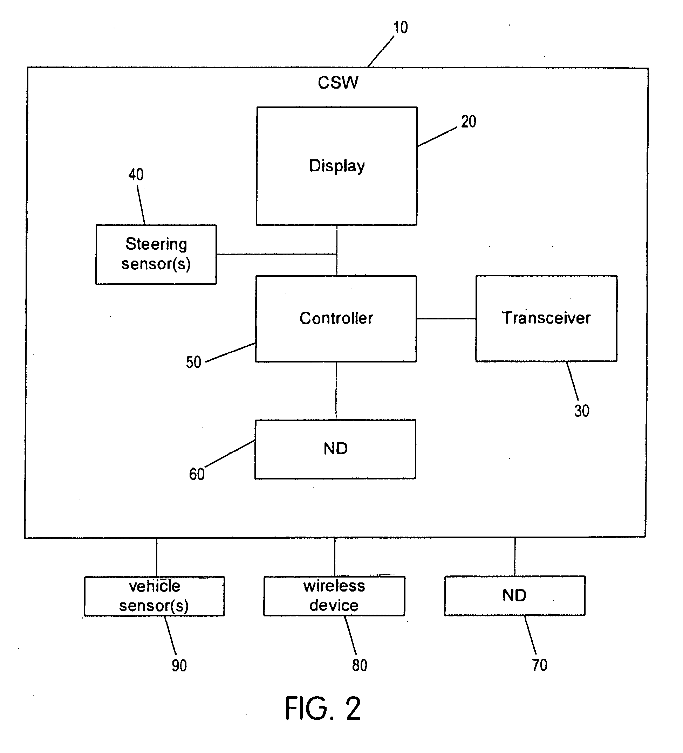

Fig. 2 is a block diagram of a vehicle communication system, according to one embodiment. The communication steering wheel 10 includes a display 20, a wireless transceiver 30, a steering sensor 40 and a controller 50. Preferably, the communication steering wheel 10 also includes a navigation device 60 (e.g., electric compass, GPS, etc.). Alternatively, or in addition, an external navigation device 70 is operatively connected to the communication steering wheel 10. In addition, a wireless device 80 and a vehicle sensor 90 are also operatively connected to the communication steering wheel 10.

The communication steering wheel 10 is configured to output and receive signals (wirelessly and via wires). According to one embodiment, the communication steering wheel 10 is configured to output signals to a wireless device 80 and receive signals from the wireless device 80 via a wireless transceiver 30. The signals can convey information of any type, including but not limited to telephony commands, caller ID information, audio, text, video, images, navigation information, turn-by-turn directions, point of interest information, vehicle information or financial information.

In addition to a display 20 (described in further detail below) the communication steering wheel 10 can include other input and output devices that allow a user to interact with the communication steering wheel. According to one embodiment, the communication steering wheel 10 may include any one of a speaker, a microphone, a light, buttons or switches.

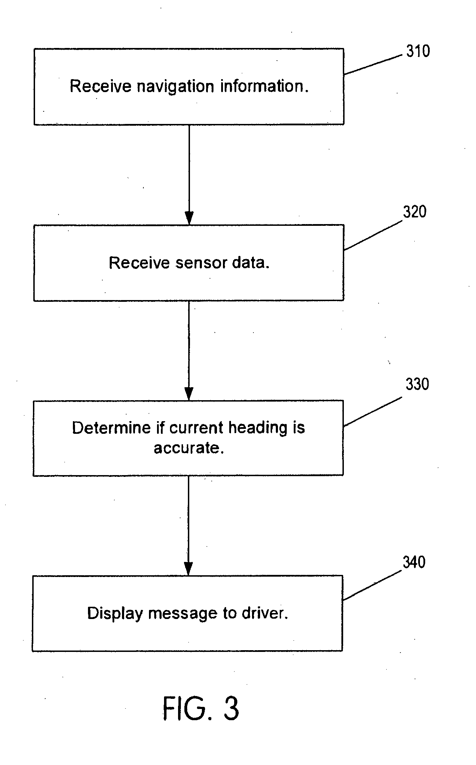

The display 20 is configured to output information to a driver. The display 20 is incorporated into the communication steering wheel as shown in FIG. 3. According to one embodiment, the display can be anyone of an inorganic LED, an organic LED, an LCD display, a TFT display, an incandescent bulb, a plasma display and a CRT display. In addition, the display can be a touch screen that allows a user to input information by touching the display.

According to one embodiment, the communication steering wheel 10 includes a wireless transceiver 30 that is configured to operably connect to a wireless device 80. The wireless transceiver 30 can communicate with the wireless device 80 using a short-range, low power communication protocol. Preferably, the wireless transceiver 30 communicates with the wireless device 80 using the well known Bluetooth® protocol. Bluetooth is routinely supported in automotive applications for "hands-free" telephony. In the alternative, the wireless transceiver 30 can communicate with the wireless device 80 using a wireless fidelity protocol.

According to one embodiment, the communication steering wheel 10 includes a navigation device 60. Preferably, the navigation device 60 is housed within the communication steering wheel module. In the alternative, or in addition to, a navigation device 70 may be an external device and operably (preferably via a wireless connection) connected to the communication steering wheel 10. The navigation device may be any one of a electronic compass, GPS or well-know navigational system. The navigation device 60 may be used to locate a desired destination of a user. According to one embodiment, the address and/or location of the desired destination may be transmitted to the navigation device 60, 70 using the wireless device 80. Via the display, the navigation system 60 is used to provide turn-by-turn directions to a user. According to another embodiment, the navigation device 60, 70 can conduct a dead reckoning type analysis of vehicle position using vehicle sensor data obtained by the steering wheel sensor 40 and/or vehicle sensors 90 (described in further detail below).

According to one embodiment, the communication steering wheel 10 is configured to communicate with a wireless device 80. Specifically, the wireless device 80 is configured to input data to the controller 50. The wireless device 80 is any one of a cell phone, PDA, laptop or other portable electronic device. According to one embodiment, the wireless device 80 can be built into the vehicle. In the alternative, the wireless device 80 is an external third party device. According to still another embodiment, the wireless device 80 and external navigation device 70 can be embodied in the same physical module. The wireless device 80 also includes a transceiver (not shown) that facilitates communication with the transceiver 30 of the communication steering wheel 10. According to one embodiment, the wireless device 10 can be used to by a user to transmit destination information to the navigation device 60, 70 via wireless transmission (Bluetooth®), which according to one embodiment, eliminates the need for the communication steering wheel 10 to include a cumbersome input device (e.g., keypad, trackball, switches etc.) Navigation information may be entered in a number of ways including but not limited to direct text entry of a street address, selection of a point of interest from a preprogrammed list: such as restaurants, parks, entertainment facilities, etc. or direct entry of GPS coordinates.

According to one embodiment, information may also be provided to the navigation device 60, 70 from various other sensors including a steering sensor 40 and/or vehicle sensors 90. According to one embodiment, the steering wheel sensors 40, vehicle sensors 90 and the navigation device 60,70 may be connected to a CANbus so that information can pass both to and from the navigation system via the data bus. Alternatively, the vehicle sensor data could be passed to the communication steering wheel 10 via the car network (e.g., a data bus) and transmitted/exchanged with the navigation system using a wireless protocol (e.g., Bluetooth).

As shown in Fig. 4, information gathered from the sensors 40, 90 can be used in conjunction with navigation data to display a message to a driver. According to one embodiment, the controller 50 receives navigation information from a wireless device 80 via the transceiver 30 (Step 310). As shown in step 320, the controller 50 receives data from one or more sensors 40, 90. Next, the controller 50 determines whether a current heading of the vehicle is accurate based on the received navigation information and received data (Step 330). Then, the controller 50 transmits a signal to the display 20 that causes the display to present a message to the driver based on an accuracy of the current heading (Step 340). According to one embodiment, the message is configured to warn the driver of excessive speed, excessive acceleration, excessive braking, insufficient braking, under-steering or oversteering. According to another embodiment the message is configured to warn the driver of a incorrect heading or incorrect turn. The steering sensors 40 and vehicle sensors 90 will be described in greater detail below.

According to one embodiment, the steering sensor(s) 40 are configured to obtain directional steering information based in a user's operation of the communication steering wheel 10 (e.g., turning) during navigation of a vehicle. The steering sensor(s) 40 are configured to measure at least one of steering wheel angle, steering wheel angle rate, tilt and inertia. According to one embodiment, using the steering sensor(s) 40 the communication steering wheel 10 provides for dimming the communication steering wheel 10 display 20 when the steering wheel is turned away from the normal or 12 o'clock upright position.

For example, the display 20 can be dimmed when turning the communication steering wheel 10 to reduce driver distractions, and raise the display intensity when the steering wheel is returned to the straight or normal position. In addition, using input from the navigation device 60, 70, the brightness of the display 20 may be adjusted or changed to provide a cue to the driver regarding an upcoming turn or other issues that need to be brought to the driver's attention.

In another embodiment, the driver could be alerted or coached (via the display 20 (e.g., brightness)) to achieve the appropriate steering angle to achieve a navigation segment based on information provided by steering sensors 40 communication steering wheel 10 includes display 20 wherein the intensity increases when the driver is turning at the ideal angle and dims when the driver moves the steering wheel away from the ideal angle. Similarly, the display 20 color is be used in such a way (e.g., color turns green when the correct steering angle is achieved, and yellow then red when turning at the wrong angle). Data from the navigation device 60, 70 is also input into the controller 50 so that the display 20 can alert the driver to appropriate or inappropriate movement of the steering wheel.

According to one embodiment, the vehicle communication system includes at least one vehicle sensor 90, configured to collect and provide sensor information about the vehicle to the communication steering wheel 10 and/or an external navigation device 70. The sensor 90 can obtain information including but not limited to a directional heading, acceleration, braking, velocity, yaw, and pitch of the vehicle.

As shown in FIG. 2, the controller 50 is configured to receive input from the wireless transceiver 30 and the steering sensor 40 and output a signal to the display 20 based on the received input. In addition, the controller 50 can use input from the navigation devices 60, 70, and the vehicle sensor 90. The controller 50 may be an analog controller, a digital controller, a software controller, or any combination thereof. According to another embodiment, the controller is configured to initiate communication with third party devices using the wireless device 80.

Preferably, the controller 50 is configured to execute software that allows any external device with wireless communication functionality to operate in conjunction with and/or exchange information with the communication steering wheel 10. Preferably, the software interfaces with the Bluetooth API and can be used for any one of hands-free telephony, audio (e.g., mp3, mp4, etc.) and text data exchange, video and image (e.g., mpeg, jpeg, etc.) data exchange. In addition, in conjunction with the steering sensor 40, the vehicle sensor 90 and the navigation devices 60, 70 the controller's 50 functionality can be applied to navigation information, point of interest information, vehicle operational status, transaction or financial data and information queries.

For example, once a wireless device 80 such as a cell phone or PDA has been enabled, the driver can interact with the cell phone or PDA/Blackberry to receive calls/make calls using the communication steering wheel 10, without direct tactile interaction with the phone. That is, the driver can initiate calls made with the wireless device 80 using an input device of the communication steering wheel 10 (e.g., touch screen, microphone via voice recognition software, physical buttons or switches). Similarly, the driver may accept incoming calls to the wireless device 80 also using an input device of the communication steering wheel 10 (e.g., touch screen, microphone via voice recognition software, physical buttons or switches). For example, caller ID information may be displayed via display 20 to enable a user to decide whether to answer an incoming call to wireless device 80.

The foregoing description has been presented for purposes of illustration and description. It is not intended to be exhaustive or to be limited to the precise form disclosed, and modifications and variations are possible in light of the above teaching or may be acquired from practice of the disclosure. The above-referenced embodiments were chosen and described in order to explain the principles of the disclosure and as a practical application to enable one skilled in the art to utilize the disclosure in various embodiments, and with various modifications, are suited to the particular use contemplated. It should be understood that the following description is intended to describe exemplary embodiments, and not to limit the claimed subject matter.

## Claims

1. A communication steering wheel (10) for a vehicle, comprising:
a display (20) configured to output information to a driver of the vehicle;
a wireless transceiver (30) configured to operably connect to a wireless device (80);
a sensor (40) configured to obtain directional steering information; and
a controller (50) configured to receive input from the wireless transceiver (30) and the sensor (40); wherein:
the controller (50) is configured to output a signal to the display (20) for alerting or coaching a driver to achieve an appropriate steering angle to achieve a navigation segment, the signal being based on the received input and data input from a navigation device (60, 70), to change either: 1) a brightness of the display (20) wherein the intensity of the display increases when the driver is turning at the ideal angle and dims when the driver moves the steering wheel away from the ideal angle, or 2) a color of the display (20) such that the display (20) is a first color when the driver is turning at the ideal angle, and the display (20) is another color, different from the first color, when the driver moves the steering wheel away from the ideal angle.

2. A communication steering wheel, as claimed in claim 1, wherein the display (20) comprises one or more of an inorganic LED, an organic LED, an LCD display, a TFT display, an incandescent bulb, a plasma display and a CRT display.

3. A communication steering wheel, as claimed in claim 1, wherein the wireless transceiver (30) is configured to communicate with the wireless device (80) using one of: a short-range, low power communication protocol,
the Bluetooth® protocol and
a wireless fidelity protocol.

4. A communication steering wheel, as claimed in claim 1, wherein the wireless transceiver (30) is configured to operably connect to a wireless device (80) being any one of a cell phone, PDA, laptop or other portable electronic device.

5. A communication steering wheel, as claimed in claim 1, wherein the sensor (40) is configured to measure at least one of steering wheel angle, steering wheel angle rate, tilt and inertia.

6. A communication steering wheel, as claimed in claim 1, wherein the signal can convey information of any one of telephony commands, caller ID information, audio, text, video, images, navigation information, turn-by-turn directions, point of interest information, vehicle information or financial information.

7. A communication steering wheel, as claimed in claim 1, further comprising:
a speaker, configured to receive a signal from the controller (50) and output an audio signal.

8. A communication steering wheel, as claimed in claim 1, wherein the controller (50) is configured to initiate communication with third party devices using the wireless device or to input data to the controller (50).

9. A communication steering wheel, as claimed in claim 1, further comprising:
the navigation system (60), the navigation system (60) being configured to receive input from the wireless device (80) via the wireless transceiver (30).

10. A vehicle communication system, comprising:
a steering wheel (10) according to any of claims 1 to 8.

11. A vehicle communication system, as claimed in claim 10, further comprising:
the navigation system (70), the navigation system (70) being operably connected to the controller (50) and configured to receive input from the wireless device (80); and
at least one vehicle sensor (90), configured to collect and provide sensor information about the vehicle to the navigation system (70).

12. A vehicle communication system, as claimed in claim 10, wherein the sensor information is at least one of directional heading, acceleration, braking, velocity, yaw, and pitch.

## Patentansprüche

1. Kommunikations-Lenkrad (10) für ein Fahrzeug, welches umfasst:
eine Anzeige (20), die ausgelegt ist, um Informationen an einen Fahrer des Fahrzeugs auszugeben;
einen drahtlosen Wandler (30), der ausgelegt ist, um funktionell an eine drahtlose Vorrichtung (80) anzubinden;
einen Sensor (40), der ausgelegt ist, um Lenkrichtungsinformationen zu erhalten; und
ein Steuergerät (50), das ausgelegt ist, um eine Eingabe von dem drahtlosen Wandler (30) und dem Sensor (40) zu empfangen; wobei:
das Steuergerät (50) ausgelegt ist, um ein Signal zu der Anzeige (20) zum Warnen oder Unterstützen eines Fahrers auszugeben, um einen geeigneten Lenkwinkel zu erreichen, um ein Navigationssegment zu bewältigen, wobei das Signal auf der empfangenen Eingabe und auf von einer Navigationsvorrichtung (60, 70) eingegebenen Daten beruht, um entweder: 1) eine Helligkeit der Anzeige (20) zu ändern, wobei die Intensität der Anzeige zunimmt, wenn der Fahrer mit dem idealen Winkel einschlägt, und schwächer wird, wenn der Fahrer das Lenkrad weg von dem idealen Winkel bewegt, oder 2) eine Farbe der Anzeige (20) so zu ändern, dass die Anzeige (20) eine erste Farbe aufweist, wenn der Fahrer mit dem idealen Winkel einschlägt, und die Anzeige (20) eine andere Farbe aufweist, die sich von der ersten Farbe unterscheidet, wenn der Fahrer das Lenkrad weg von dem idealen Winkel bewegt.

2. Kommunikations-Lenkrad nach Anspruch 1, wobei die Anzeige (20) ein oder mehrere von einer anorganischen LED, einer organischen LED, einer LCD-Anzeige, einer TFT-Anzeige, einer Glühlampe, einer Plasmaanzeige und einer CRT-Anzeige umfasst.

3. Kommunikations-Lenkrad nach Anspruch 1, wobei der drahtlose Wandler (30) ausgelegt ist, um mit der drahtlosen Vorrichtung (80) unter Verwenden eines von:
einem Kommunikationsprotokoll niedrigen Energiebedarfs für kurze Distanzen,
dem Bluetooth® Protokoll und
einem WiFi-Protokoll
zu kommunizieren.

4. Kommunikations-Lenkrad nach Anspruch 1, wobei der drahtlose Wandler (30) ausgelegt ist, um an eine drahtlose Vorrichtung (80) funktionell anzubinden, welche eines von Mobiltelefon, PDA, Laptop oder anderer tragbarer elektronischer Vorrichtung ist.

5. Kommunikations-Lenkrad nach Anspruch 1, wobei der Sensor (40) ausgelegt ist, um mindestens eines von Lenkradwinkel, Lenkradwinkelrate, Neigung und Trägheit zu messen.

6. Kommunikations-Lenkrad nach Anspruch 1, wobei das Signal Informationen aus: Telefonbefehlen, Anruferkennungsinformationen, Audio, Text, Video, Bildern, Navigationsinformationen, Richtungswechselbefehlen, Informationen über POI (Orte von Interesse), Fahrzeuginformationen oder Finanzinformationen übermitteln kann.

7. Kommunikations-Lenkrad nach Anspruch 1, welches weiterhin umfasst:
einen Lautsprecher, der ausgelegt ist, um ein Signal von dem Steuergerät (50) zu empfangen und ein Audiosignal auszugeben.

8. Kommunikations-Lenkrad nach Anspruch 1, wobei das Steuergerät (50) ausgelegt ist, um eine Kommunikation mit externen Vorrichtungen, die die drahtlose Vorrichtung nutzen, einzuleiten oder um Daten zu dem Steuergerät (50) einzugeben.

9. Kommunikations-Lenkrad nach Anspruch 1, welches weiterhin umfasst:
das Navigationssystem (60), wobei das Navigationssystem (60) ausgelegt ist, um mittels des drahtlosen Wandlers (30) eine Eingabe von der drahtlosen Vorrichtung (80) zu empfangen.

10. Fahrzeugkommunikationssystem, welches umfasst:
ein Lenkrad (10) nach einem der Ansprüche 1 bis 8.

11. Fahrzeugkommunikationssystem nach Anspruch 10, welches weiterhin umfasst:
Navigationssystem (70), wobei das Navigationssystem (70) funktionell mit dem Steuergerät (50) verbunden ist und ausgelegt ist, um von der drahtlosen Vorrichtung (80) Eingaben zu empfangen; und
mindestens einen Fahrzeugsensor (90), der ausgelegt ist, um Sensorinformationen über das Fahrzeug zu erfassen und zu dem Navigationssystem (70) zu liefern.

12. Fahrzeugkommunikationssystem nach Anspruch 10, wobei die Sensorinformationen mindestens eines von Fahrtrichtung, Beschleunigung, Bremsen, Geschwindigkeit, Gieren und Nicken sind.

## Revendications

1. Volant de direction communicant (10) pour véhicule, comprenant :
un écran (20) configuré pour délivrer des informations à un conducteur du véhicule ;
un émetteur-récepteur sans fil (30) configuré pour se connecter fonctionnellement à un appareil sans fil (80) ;
un capteur (40) configuré pour obtenir une information de braquage directionnel ; et
un contrôleur (50) configuré pour recevoir une entrée de l'émetteur-récepteur sans fil (30) et du capteur (40) ; dans lequel :
le contrôleur (50) est configuré pour envoyer un signal à l'écran (20) pour alerter ou ordonner au conducteur d'obtenir un angle de braquage approprié pour réaliser un segment de navigation, le signal étant basé sur l'entrée reçue et sur des données entrées depuis un appareil de navigation (60, 70), pour changer : 1) soit une luminosité de l'écran (20) dans laquelle l'intensité de l'affichage augmente quand le conducteur tourne avec l'angle idéal et diminue quand le conducteur éloigne le volant de l'angle idéal, 2) soit une couleur de l'écran (20) de telle manière que l'écran (20) a une première couleur quand le conducteur tourne avec l'angle idéal, et que l'écran (20) a une autre couleur, différente de la première couleur, quand le conducteur éloigne le volant de l'angle idéal.

2. Volant de direction communicant selon la revendication 1, dans lequel l'écran (20) comprend un ou plusieurs écrans parmi un écran DEL inorganique, un écran LED organique, un écran à cristaux liquides, un écran TFT, une ampoule à incandescence, un écran plasma et un écran à tube cathodique.

3. Volant de direction communicant selon la revendication 1, dans lequel l'émetteur-récepteur sans fil (30) est configuré pour communiquer avec l'appareil sans fil (80) en utilisant un protocole parmi :
un protocole de communication à courte distance et à faible puissance,
le protocole Bluetooth® et
un protocole Wi-Fi.

4. Volant de direction communicant selon la revendication 1, dans lequel l'émetteur-récepteur sans fil (30) est configuré pour se connecter fonctionnellement à un appareil sans fil (80) qui est un appareil électronique portable quelconque parmi un téléphone cellulaire, un assistant personnel numérique, un ordinateur portable ou autre.

5. Volant de direction communicant selon la revendication 1, dans lequel le capteur (40) est configuré pour mesurer au moins un paramètre parmi un angle du volant de direction, une vitesse angulaire de volant de direction, une inclinaison et une inertie.

6. Volant de direction communicant selon la revendication 1, dans lequel le signal peut transporter des informations quelconques parmi des commandes téléphoniques, des informations d'identification d'appelant, des informations de navigation sous forme audio, textuelle, vidéo, graphique, des changements de direction, des informations de points remarquables, des informations de véhicule ou des informations financières.

7. Volant de direction communicant selon la revendication 1, comprenant en outre un haut-parleur, configuré pour recevoir un signal du contrôleur (50) et pour émettre un signal audio.

8. Volant de direction communicant selon la revendication 1, dans lequel le contrôleur (50) est configuré pour amorcer une communication avec des appareils tiers en utilisant l'appareil sans fil ou pour entrer des données dans le contrôleur (50).

9. Volant de direction communicant selon la revendication 1, comprenant en outre le système de navigation (60), le système de navigation (60) étant configuré pour recevoir une entrée de l'appareil sans fil (80) par l'intermédiaire de l'émetteur-récepteur sans fil (30).

10. Système de communication de véhicule comprenant :
un volant de direction (10) selon l'une quelconque des revendications 1 à 8.

11. Système de communication de véhicule selon la revendication 10, comprenant en outre :
le système de navigation (70), le système de navigation (70) étant connecté fonctionnellement au contrôleur (50) et configuré pour recevoir une entrée de l'appareil sans fil (80) ; et
au moins un capteur de véhicule (90) configuré pour collecter et fournir des informations de capteur concernant le véhicule au système de navigation (70).

12. Système de communication de véhicule selon la revendication 10, dans lequel l'information de capteur est au moins une information parmi le cap, l'accélération, le freinage, la vitesse, le mouvement de lacet et le tangage.
